# FASCICULE DE BREVET EUROPEEN

(11) **EP 2 288 452 B1**
(45) Date de publication et mention de la délivrance du brevet: **18.01.2012**
(21) Numéro de dépôt: 09761872.2
(22) Date de dépôt: 19.05.2009
(51) Int. Cl.: B08B 1/04, B29B 17/02

(54) **UTILISATION D'UN DISPOSITIF POUR LE NETTOYAGE DES FIBRES METALLIQUES EN VUE DE LEUR RECYCLAGE ET PROCEDE DE RECUPERATION**
VERWENDUNG EINER VORRICHTUNG ZUR REINIGUNG VON METALLFASERN IM HINBLICK AUF IHR RECYCLING UND IHRE RÜCKGEWINNUNG
USE OF A DEVICE FOR CLEANING METAL FIBERS WITH A VIEW TO RECYCLE AND RECOVER THE SAME

(30) Priorité: 21.05.2008 FR 0802742
(43) Date de publication de la demande: 02.03.2011
(73) Titulaire: Mossotti, Jean-Luc, 13240 Septemes les Vallons (FR)
(72) Inventeur: Mossotti, Jean-Luc, 13240 Septemes les Vallons (FR)
(74) Mandataire: Santarelli
(86) Numéro de dépôt international: PCT/FR2009/000578
(87) Numéro de publication internationale: WO 2009/150321

(56) Documents cités:
- DE-B- 1 225 027
- FR-A- 576 663
- FR-A- 584 861
- GB-A- 216 110
- US-A- 5 624 078

## Description

L'invention se place dans le domaine de la récupération et du recyclage de matériaux, particulièrement dans le recyclage des pneumatiques.

Le recyclage des pneumatiques est un problème bien connu qui fait l'objet de nombreux développements.

On sait que sur environ 400 000 tonnes (soit 30 millions de pneus usagés) produites chaque année, 60 000 sont rechapées et 80 000 partent vivre une nouvelle vie sous d'autres cieux. 30 000 tonnes sont brûlées, une quantité non négligeable sert à maintenir les bâches sur les silos et seulement 45 000 tonnes sont recyclées. Près de 185 000 tonnes terminent donc dans les dépôts d'ordures, où les risques d'incendie ne sont pas négligeables.

Un pneumatique rassemble plus de 200 composants répartis en 5 familles :
- le caoutchouc naturel, composant principal des bandes de roulement des pneus poids lourd ;
- le caoutchouc synthétique, élément essentiel des bandes de roulement des pneus tourisme ;
- le noir de carbone et la silice, utilisés comme charge renforçante pour améliorer notamment la résistance à l'usure ;
- les câbles textiles et métalliques, qui constituent la ceinture et les tringles de la carcasse ;
- divers agents chimiques

Le caoutchouc représente environ 75% d'un pneumatique, le textile environ 15 % et les fibres métalliques environ 10%. Cela donne une idée de la masse métallique récupérable chaque année rien qu'avec les pneumatiques.

Les pneumatiques sont assemblés sans colle grâce à des procédés, tels que le calandrage qui incorpore les câbles dans les couches minces de gomme par compression entre deux cylindres de grand diamètre.

Les pneumatiques peuvent être brûlés par exemple dans les cimenteries.

Le recyclage des caoutchoucs sous forme de *granulats* ne cesse de se développer. A cet égard on peut citer comme exemple d'utilisation
- les roues et roulettes (bandages et roues pleines (caddies, rollers...))
- les sols et bordures de sécurité d'airs de jeux.
- les terrains de sport (tennis, pistes d'athlétisme, terrains de golf (mélangé à la terre...), sols équestres (manèges, pistes...)).
- les isolants phoniques (barrières anti-bruit)
- l'enrobé d'assise
- l'enrobé de roulement
- les matériaux pour toitures (calfeutrage, ...)
- les revêtements de surfaces intérieures (dalles, moquettes renforcées, ...)
- les signalisations et accessoires routiers (dos d'ânes, bornes, ...)
- les conduits de drainage poreux
- les tapis pour animaux (Chevaux, vaches, chiens ...)
- et diverses autres utilisations
   ○ dans l'automobile (garnitures de freins, volant, lèches vitres...)
   ○ les trains et tramways
   ○ les chaussures
   ○ la fabrication de nouveaux pneumatiques
   ○ les sports aquatiques (palmes, tubas, ...)
   ○ les équipements de loisirs (appareils photos, étuis, ...)
   ○ les drains filtrants routiers
   ○ les fournitures et équipements de bureau (dossiers de chaises, ...).
   Actuellement, les pneumatiques usagés sont valorisés par deux méthodes
- broyage à l'aide de cisailles rotatives pour réduire les pneumatiques en petits morceaux (cheap) de la taille d'environ 10 cm x 10 cm, de façon à pouvoir les enfourner en cimenterie ;
- passage de ces petits morceaux (cheap) dans des presses à filières qui permettent d'obtenir trois fractions mélangées
   ○ de la poudre de caoutchouc
   ○ des fibres textiles
   ○ et des paillettes d'acier.

Ces trois fractions sont ensuite séparées.

C'est à cette troisième fraction constituée en général d'un acier extrêmement résistant et de haute qualité que s'intéresse l'invention.

Comme indiqué précédemment, les câbles métalliques et/ou de textiles sont incorporés dans le pneumatique par calandrage dans les couches minces de gomme par compression entre deux cylindres de grand diamètre. Cette compression à très haute pression rend la cohésion entre les câbles et les gommes extrêmement forte.

Lors du procédé de valorisation des pneumatiques, le passage des "cheap" dans les presses à filières conduit à l'obtention, après séparation, de paillettes d'aciers encore riches en fibres textiles et caoutchouc étroitement lié à l'acier lui-même. En l'état, ces paillettes de ferrailles sont impropres à la fusion en aciérie.

Il est donc nécessaire avant de pouvoir recycler cet acier en aciérie, de le nettoyer afin d'obtenir une masse d'acier pure (c'est à dire sans fibre textile ni caoutchouc) à quelque chose compris entre 90 et 100 %.

Il a bien été proposé des procédés basés sur un cisaillement extrêmement fins des fibres d'acier, mais ceux-ci s'avèrent relativement décevants car des matières contaminantes (fibre textile et caoutchouc) restent malgré tout adhérentes de la fibre d'acier, continuant de la rendre impropre à la fusion. On comprend donc qu'il existe un besoin en un dispositif de nettoyage des fibres d'aciers, issu de la récupération des pneumatiques qui soit simple et peu onéreux et conduise à la production de fibres d'acier récupérées propres à la fusion en aciérie.

C'est un des buts de la présente invention.

L'invention est basée sur le frottement des fibres d'acier contaminées sur une paroi solide afin d'éliminer des fibres d'acier, par friction, tous les, à tout le moins la très grande majeure partie des, produits contaminants adhérents auxdites fibres d'acier, comme par exemple peuvent l'être les fibres textiles et/ou le caoutchouc dans le cas de l'acier provenant du recyclage des pneumatiques.

Ainsi l'invention a pour objet l'utilisation d'un dispositif comprenant
- au moins deux cônes coaxiaux, ledit premier cône ou stator étant fixe et le deuxième cône ou rotor, de dimensions inférieures à celle du stator, positionné à l'intérieur du stator, étant mobile en rotation selon l'axe central commun aux deux cônes, les parois intérieure du stator et extérieure du rotor n'entrant jamais en contact et ménageant entre elles un espace libre lui-même en coupe de forme conique, les bases inférieures et les bases supérieures du stator et du rotor étant respectivement situées du même côté ;
- un moyen de mise en mouvement du rotor,
pour le nettoyage des fibres métalliques, particulièrement des fibres d'acier, très particulièrement des fibres d'acier provenant du recyclage des pneumatiques,

Le brevet américain n° 5,624,078, décrit un dispositif avec lequel des pneus peuvent être découpés en petits morceaux grâce à des lames fixés sur le rotor. L'acier est ensuite éliminé dans un séparateur magnétique.

Ce dispositif ne permet pas de nettoyer des fibres métalliques de telle sorte qu'elles soient acceptables en aciérie. En fait en sortie de ce dispositif on obtient des fibres d'acier contaminées qui ne sont que la matière première utilisable dans le dispositif selon l'invention.

On comprend donc que les deux cônes sont emboîtés l'un dans l'autre selon leur axe central commun, leurs grandes bases et leurs petites bases se trouvant respectivement du même côté, de telle sorte qu'ils ménagent entre eux un espace dont la lumière supérieure (destinée à recevoir le matériau à nettoyer brut) est plus grande que la lumière inférieure (destinée à laisser échapper le matériau affiné).

Selon l'invention le stator peut présenter une hauteur comprise entre 800 mm et 3200, préférentiellement entre 900 mm et 3000 mm.

De même selon l'invention, le stator peut présenter une base circulaire inférieure de diamètre compris entre 650 mm et 2800 mm, préférentiellement entre 750 mm et 2600 mm.

Selon une forme de réalisation particulière de l'invention, la paroi du stator peut présenter un angle compris entre 15° et 45° par rapport à la verticale, préférentiellement compris entre 20° et 40°.

Selon une autre forme de réalisation particulière de l'invention, la paroi du stator peut ne pas être rectiligne et présenter un partie inférieure et une partie supérieure présentant entre elle un angle compris entre 170° et 179°, préférentiellement entre 174° et 176°.

Selon cette forme particulière de réalisation de l'invention, la partie inférieure de la paroi de stator peut représenter entre 15% et 35% de la hauteur totale du stator, préférentiellement entre 20% et 30%.

Selon encore une autre forme de réalisation particulière de l'invention, la paroi du rotor peut présenter un angle compris entre 5° et 25°, préférentiellement entre 10° et 20°par rapport à la verticale.

Selon enfin une autre forme particulière de réalisation du dispositif utilisé selon l'invention, le rapport entre le diamètre de la base inférieure (petite base) du rotor et la diamètre de la base inférieure (petite base) du stator peut être compris entre 0,82 et 0,99, préférentiellement entre 0,90 et 0,95.

Ainsi selon l'invention, la base inférieure du rotor peut présenter un diamètre compris entre 530 mm et 2750 mm, préférentiellement entre 615 mm et 2580 mm.

Selon l'invention tout moyen de mise en mouvement du rotor peut être utilisé. On citera par exemple un moteur, éventuellement muni d'un réducteur, ledit moteur pouvant être électrique ou thermique. L'entraînement du rotor peut encore être réalisé par un moyen pneumatique. Préférentiellement selon l'invention, le moyen de mise en mouvement du rotor est un moteur électrique.

Selon l'invention, le rotor peut être mu à une vitesse comprise entre 45 et 100 tours/mn, préférentiellement entre 60 et 85 tours/mn.

Selon l'invention, l'ensemble stator/rotor peut être posé sur une base pour peu que celle-ci ménage un passage d'écoulement de la matière affinée.

Préférentiellement selon l'invention, l'ensemble est en porte à faux. On comprend que dans cette disposition ensemble est maintenu latéralement par tout moyen de fixation. Dans cette disposition, le moyen d'entraînement du rotor est préférentiellement situé en partie haute de l'ensemble du dispositif.

Selon l'invention, le rotor peut être un cône plein ou évidé intérieurement. Pour des raisons pratique, le rotor est un cône évidé intérieurement.

Bien entendu, l'Homme du Métier saura utiliser les matériaux adéquats pour réaliser les parois du stator et /ou du rotor. Il utilisera préférentiellement les matériaux généralement utilisés dans le domaine des machines outils, ne serait-ce que pour que le dispositif selon invention résiste aux contraintes qui lui sont imposées par sa fonction (résistance à la friction, aux pressions, à la corrosion, à l'oxydation, etc.) comme par exemple l'acier, particulièrement l'acier inoxydable, ou encore l'acier au carbone. Ainsi selon l'invention, les parois du stator et /ou du rotor pourront être, simultanément et/ou indépendamment, en acier, particulièrement en acier inoxydable, ou encore en acier au carbone. Préférentiellement selon l'invention, les parois du stator et/ou du rotor pourront être en acier.

Selon une variante de l'invention, la paroi de stator peut être réalisée en béton. Dans cette configuration particulière, les parois du stator et du rotor ne seront pas réalisées dans le même matériau et la paroi du rotor pourra être en acier, particulièrement l'acier inoxydable, ou encore l'acier au carbone.

En ce qui concerne l'échantillonnage des matériaux utilisés, l'Homme du Métier saura là encore déterminer sans difficulté l'épaisseur des parois constituant le stator et le rotor en fonction de leurs dimensions respectives et des contraintes que ceux-ci auront à subir.

Selon l'invention les parois constituant le stator et le rotor peuvent présenter, par exemple simultanément et/ou indépendamment, une épaisseur comprise entre 10 mm et 200 mm, préférentiellement entre 15 mm et 100 mm.

Enfin, chacune des parois, simultanément ou indépendamment, pourra être constituée d'une seule ou de plusieurs pièce(s). En fait l'Homme du Métier comprend qu'il est préférable que les parois, qui sont soumises à l'usure du fait de la friction et donc qui doivent être remplacées régulièrement, soient en plusieurs pièces aisément démontables lorsqu'il faut les remplacer. Le nombre de pièces constituant lesdites parois n'est pas un élément essentiel de l'invention. L'Homme du Métier saura adapter le nombre de pièces en fonction des contraintes qu'il rencontrera.

La paroi interne du stator et la paroi externe du rotor, peuvent être, simultanément ou indépendamment, lisses ou striées. Préférentiellement elles sont striées, ce qui assure une meilleure friction. Si elles sont striées, les stries sont avantageusement orientées verticalement afin de faciliter l'écoulement de la matière vers le bas.

L'invention a encore pour objet un procédé de nettoyage des fibres métalliques, particulièrement des fibres d'acier, très particulièrement des fibres d'acier provenant du recyclage des pneumatiques, utilisant un dispositif tel que décrit précédemment, dans lequel on introduit dans l'espace ménagé entre le stator et le rotor du dispositif selon l'invention, par la lumière supérieure, le matériau à nettoyer brut, le rotor étant mu en rotation à une vitesse de 70 tours/minutes, et l'on récupère au moins le matériau affiné à la sortie de la lumière inférieure de l'espace ménagé entre le stator et le rotor, en partie basse du dispositif, ledit matériau pouvant être mélangé au résidu de contaminants retirés de la surface du matériau à nettoyer brut.

L'invention a enfin pour objet l'utilisation d'un dispositif selon l'invention, comprenant un stator et un rotor en forme de cônes, lesdits cônes étant emboîtés l'un dans l'autre selon un axe vertical central commun, et un moyen d'entraînement du rotor,
- ledit stator présentant une hauteur de 950 mm, ayant une base inférieure de 800 mm, la paroi dudit stator étant en acier de 15 mm d'épaisseur, non rectiligne, présentant une partie inférieure s'élevant sur une hauteur de 200 mm avec un angle de 20° par rapport à la verticale et une partie supérieures, jointive de la partie inférieure, s'élevant sur une hauteur de 750 mm avec un angle de 25° par rapport à la verticale, la partie inférieure et la partie supérieure présentant entre elles un angle de 175°,
- ledit rotor présentant une hauteur de 1000 mm, ayant une base inférieure de 750 mm, la paroi dudit stator étant en acier de 15 mm d'épaisseur, rectiligne, présentant un angle de 25° par rapport à la verticale.

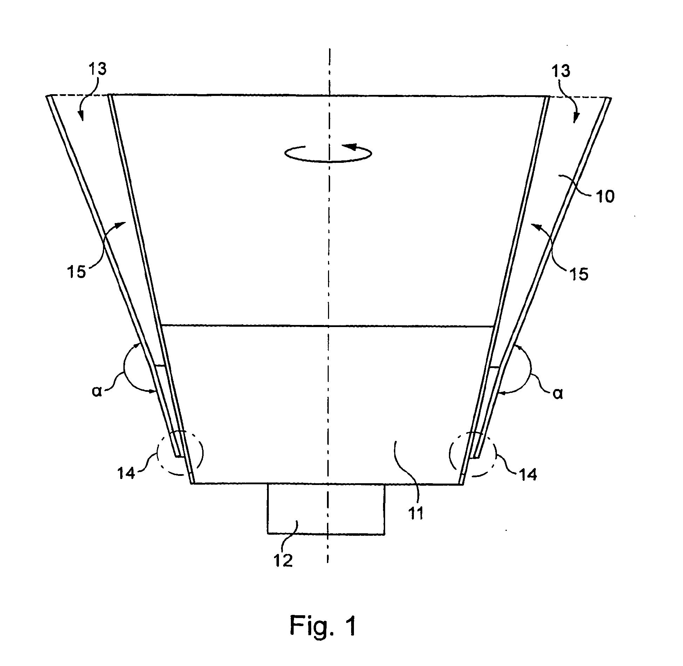

L'invention sera mieux comprise si l'on se réfère à la figure 1 annexée qui représente schématiquement un dispositif selon l'invention.

On observe à la figure 1, un dispositif selon l'invention dans lequel est représenté le stator (10), le rotor (11) et le moyen d'entraînement du rotor (12).

On note la lumière supérieure (13) et la lumière inférieure (14) de l'espace (15) ménagé entre le stator et le rotor.

On note encore que dans le dispositif représenté, la paroi du stator n'est pas rectiligne, celle-ci présentant en partie basse un angle (α) de 155°.

## Revendications

1. Utilisation d'un dispositif comprenant
- au moins deux cônes coaxiaux, ledit premier cône ou stator étant fixe et le deuxième cône ou rotor, de dimensions inférieures à celle du stator, positionné à l'intérieur du stator, étant mobile en rotation selon l'axe central commun aux deux cônes, les parois intérieure du stator et extérieure du rotor n'entrant jamais en contact et ménageant entre elles un espace libre lui-même en coupe de forme conique, les petites bases et les grandes bases du stator et du rotor étant respectivement situées du même côté ;
- un moyen de mise en mouvement du rotor,
pour le nettoyage des fibres métalliques, particulièrement des fibres d'acier, très particulièrement des fibres d'acier provenant du recyclage des pneumatiques,

2. Utilisation selon la revendication 1, **caractérisée en ce que** la paroi du stator est rectiligne ou non.

3. Utilisation selon la revendication 2, **caractérisée en ce que** la paroi du stator présente un angle compris entre 15 et 45° par rapport à la verticale, préférentiellement compris entre 20 et 40 °.

4. Utilisation selon la revendication 2, **caractérisée en ce que** lorsque la paroi du stator n'est pas rectiligne, elle présente un partie inférieure et une partie supérieure formant entre elle un angle compris entre 170° et 179°, préférentiellement entre 174° et 176°.

5. Utilisation selon l'une quelconque des revendications 2 à 4, **caractérisée en ce que** la partie inférieure de la paroi de stator représente entre 15% et 35% de la hauteur totale du stator, préférentiellement entre 20% et 30%.

6. Utilisation selon l'une quelconque des revendications 1 à 5, **caractérisée en ce que** la paroi du rotor présente un angle compris entre 5° et 25°, préférentiellement entre 10° et 20°par rapport à la verticale.

7. Utilisation selon l'une quelconque des revendications 1 à 6, **caractérisée en ce que** le rapport entre le diamètre de la petite base du rotor et le diamètre de la petite base du stator est compris entre 0,82 et 0,99, préférentiellement entre 0,90 et 0,95.

8. Utilisation selon l'une quelconque des revendications 1 à 7, **caractérisée en ce que** le moyen de mise en mouvement du rotor est un moteur électrique ou thermique ou encore un moyen pneumatique.

9. Utilisation selon l'une quelconque des revendications 1 à 8, **caractérisée en ce que** le rotor est mu à une vitesse comprise entre 45 et 100 tours/mn, préférentiellement entre 60 et 85 tours/mn.

10. Utilisation selon l'une quelconque des revendications 1 à 9, **caractérisée en ce que** les parois du stator et /ou du rotor sont, simultanément et/ou indépendamment, en acier, particulièrement en acier inoxydable, ou encore en acier au carbone.

11. Utilisation selon l'une quelconque des revendications 1 à 10, **caractérisée en ce que** les parois du stator et /ou du rotor présentent, simultanément et/ou indépendamment, une épaisseur comprise entre 10 mm et 200 mm, préférentiellement entre 15 mm et 100 mm.

12. Utilisation selon l'une quelconque des revendications 1 à 11, **caractérisée en ce que** les parois du stator et /ou du rotor, simultanément ou indépendamment, sont lisses ou striées, préférentiellement striées, très préférentiellement striées verticalement.

13. Procédé de nettoyage des fibres métalliques, particulièrement des fibres d'acier, très particulièrement des fibres d'acier provenant du recyclage des pneumatiques, utilisant un dispositif tel que décrit précédemment, dans lequel on introduit dans l'espace ménagé entre le stator et le rotor du dispositif selon l'invention, par la lumière supérieure, le matériau à nettoyer brut, le rotor étant mu en rotation à une vitesse comprise 45 et 100 tours/mn, préférentiellement entre 60 et 85 tours/mn, et l'on récupère au moins le matériau affiné à la sortie de la lumière inférieure de l'espace ménagé entre le stator et le rotor, en partie basse du dispositif, ledit matériau pouvant être mélangé au résidu de contaminants retirés de la surface du matériau à nettoyer brut.

14. Utilisation selon l'une quelconque des revendications 1 à 12 d'un dispositif comprenant un stator et un rotor en forme de cônes, lesdits cônes étant emboîtés l'un dans l'autre selon un axe vertical central commun, et un moyen d'entraînement du rotor,
- ledit stator présentant une hauteur de 950 mm, ayant une base inférieure de 800 mm, la paroi dudit stator étant en acier de 15 mm d'épaisseur, non rectiligne, présentant une partie inférieure s'élevant sur une hauteur de 200 mm avec un angle de 20° par rapport à la verticale et une partie supérieures, jointive de la partie inférieure, s'élevant sur une hauteur de 750 mm avec un angle de 25° par rapport à la verticale, la partie inférieure et la partie supérieure présentant entre elles un angle de 175°,
- ledit rotor présentant une hauteur de 1000 mm, ayant une base inférieure de 750 mm la paroi dudit stator étant en acier de 15 mm d'épaisseur, rectiligne, présentant un angle de 25° par rapport à la verticale.

## Claims

1. Use of a device comprising
- at least two coaxial cones, said first cone or stator being fixed and the second cone or rotor, having smaller dimensions than those of the stator, positioned inside the stator, being mobile in rotation about the central axis common to the two cones, the inner wall of the stator and outer wall of the rotor never coming into contact and arranging between them a free space itself having a conical cross section, the small bases and the large bases of the stator and of the rotor being respectively situated on the same side;
- a means of moving the rotor,
for cleaning metal fibres, particularly steel fibres, very particularly steel fibres originating from tyre recycling.

2. Use according to claim 1, **characterized in that** the wall of the stator is rectilinear or not.

3. Use according to claim 2, **characterized in that** the wall of the stator has an angle comprised between 15° and 45° to the vertical, preferably comprised between 20° and 40°.

4. Use according to claim 2, **characterized in that** when the wall of the stator is not rectilinear, it has a lower part and an upper part between them forming an angle comprised between 170° and 179°, preferably between 174° and 176°.

5. Use according to any one of claims 2 to 4, **characterized in that** the lower part of the stator wall represents between 15% and 35% of the total height of the stator, preferably between 20% and 30%.

6. Use according to any one of claims 1 to 5, **characterized in that** the wall of the rotor has an angle comprised between 5° and 25°, preferably between 10° and 20° to the vertical.

7. Use according to any one of claims 1 to 6, **characterized in that** the ratio between the diameter of the small base of the rotor and the diameter of the small base of the stator is comprised between 0.82 and 0.99, preferably between 0.90 and 0.95.

8. Use according to any one of claims 1 to 7, **characterized in that** the means of moving the rotor is an electric motor or a heat engine or also a pneumatic means.

9. Use according to any one of claims 1 to 8, **characterized in that** the rotor is
moved at a speed comprised between 45 and 100 rpm, preferably between 60 and 85 rpm.

10. Use according to any one of claims 1 to 9, **characterized in that** the walls of the stator and/or of the rotor are simultaneously and/or independently made of steel, particularly stainless steel, or also carbon steel.

11. Use according to any one of claims 1 to 10, **characterized in that** the walls of the stator and/or of the rotor, simultaneously and/or independently, have a thickness comprised between 10 mm and 200 mm, preferably between 15 mm and 100 mm.

12. Use according to any one of claims 1 to 11, **characterized in that** the walls of the stator and/or of the rotor, simultaneously or independently, are smooth or ribbed, preferably ribbed, very preferably vertically ribbed.

13. Method of cleaning metal fibres, particularly steel fibres, very particularly steel fibres originating from tyre recycling, using a device as described previously, in which the raw material to be cleaned is introduced into the space arranged between the stator and the rotor of the device according to the invention, through the upper opening, the rotor being driven in rotation at a speed comprised between 45 and 100 rpm, preferably between 60 and 85 rpm, and at least the refined material is collected on leaving the lower opening of the space arranged between the stator and the rotor, on the lower part of the device, said material possibly being mixed with the residue of contaminants removed from the surface of the raw material to be cleaned.

14. Use according to any one of claims 1 to 12 of a device comprising a stator and a rotor in the form of cones, said cones being nested together along a common central vertical axis, and a drive means of the rotor,
- said stator having a height of 950 mm, having a lower base of 800 mm, the wall of said stator being made of steel 15 mm thick, non-rectilinear, having a lower part reaching a height of 200 mm with an angle of 20° to the vertical and an upper part, meeting the lower part, reaching a height of 750 mm with an angle of 25° to the vertical, the lower part and the upper part between them forming an angle of 175°,
- said rotor having a height of 1,000 mm, having a lower base of 750 mm, the wall of said stator being made of steel 15 mm thick, rectilinear, forming an angle of 25° to the vertical.

## Patentansprüche

1. Verwendung einer Vorrichtung, die Folgendes umfasst:
- wenigstens zwei koaxiale Kegel, wobei der genannte erste Kegel oder Ständer fest ist und der zweite Kegel oder Läufer, dessen Abmessungen kleiner als die des Ständers sind, im Innern des Ständers positioniert und entlang einer den beiden Kegeln gemeinsamen mittleren Achse rotationsbeweglich ist, wobei die Innenwand des Ständers und die Außenwand des Läufers niemals miteinander in Kontakt kommen und zwischen sich einen freien Raum bilden, der wiederum einen konischen Querschnitt hat, wobei sich die kleinen Basen und die großen Basen des Ständers und des Läufers jeweils auf derselben Seite befinden;
- ein Mittel, um den Läufer in Bewegung zu versetzen,
zum Reinigen von metallischen Fasern, insbesondere Stahlfasern, ganz besonders von Stahlfasern aus der Rückgewinnung von Luftreifen.

2. Verwendung nach Anspruch 1, **dadurch gekennzeichnet, dass** die Wand des Ständers geradlinig ist oder nicht.

3. Verwendung nach Anspruch 2, **dadurch gekennzeichnet, dass** die Wand des Ständers einen Winkel zwischen 15 und 45°, vorzugsweise zwischen 20 und 40° in Bezug zur Vertikalen bildet.

4. Verwendung nach Anspruch 2, **dadurch gekennzeichnet, dass** die Wand des Ständers, wenn sie nicht geradlinig ist, einen unteren Teil und einen oberen Teil aufweist, die zwischen sich einen Winkel zwischen 170° und 179°, vorzugsweise zwischen 174° und 176° bilden.

5. Verwendung nach einem der Ansprüche 2 bis 4, **dadurch gekennzeichnet, dass** der untere Teil der Ständerwand zwischen 15 % und 35 %, vorzugsweise zwischen 20 % und 30 % der Gesamthöhe des Ständers ausmacht.

6. Verwendung nach einem der Ansprüche 1 bis 5, **dadurch gekennzeichnet, dass** die Wand des Läufers einen Winkel zwischen 5° und 25°, vorzugsweise zwischen 10° und 20° in Bezug zur Vertikalen bildet.

7. Verwendung nach einem der Ansprüche 1 bis 6, **dadurch gekennzeichnet, dass** das Verhältnis zwischen dem Durchmesser der kleinen Basis des Läufers und dem Durchmesser der kleinen Basis des Ständers zwischen 0,82 und 0,99, vorzugsweise zwischen 0,90 und 0,95 liegt.

8. Verwendung nach einem der Ansprüche 1 bis 7, **dadurch gekennzeichnet, dass** das Mittel zum Inbewegungversetzen des Läufers ein Elektro- oder Wärmemotor oder auch ein pneumatisches Mittel ist.

9. Verwendung nach einem der Ansprüche 1 bis 8, **dadurch gekennzeichnet, dass** der Läufer auf eine Geschwindigkeit zwischen 45 und 100 U/min, vorzugsweise zwischen 60 und 85 U/min gebracht wird.

10. Verwendung nach einem der Ansprüche 1 bis 9, **dadurch gekennzeichnet, dass** die Wände des Ständers und/oder des Läufers, gleichzeitig und/oder unabhängig, aus Stahl, insbesondere aus nichtrostendem Stahl oder aus Kohlenstoffstahl bestehen.

11. Verwendung nach einem der Ansprüche 1 bis 10, **dadurch gekennzeichnet, dass** die Wände des Ständers und/oder des Läufers, gleichzeitig und/oder unabhängig, eine Dicke zwischen 10 mm und 200 mm, vorzugsweise zwischen 15 mm und 100 mm aufweisen.

12. Verwendung nach einem der Ansprüche 1 bis 11, **dadurch gekennzeichnet, dass** die Wände des Ständers und/oder des Läufers, gleichzeitig oder unabhängig, glatt oder gerippt, vorzugsweise gerippt, besonders bevorzugt vertikal gerippt sind.

13. Verfahren zum Reinigen von metallischen Fasern, insbesondere Stahlfasern, ganz besonders Stahlfasern aus der Rückgewinnung von Luftreifen, mittels einer Vorrichtung wie oben beschrieben, bei dem in den Raum zwischen dem Ständer und dem Läufer der erfindungsgemäßen Vorrichtung durch den oberen Schlitz das zu reinigende Rohmaterial eingeleitet wird, wobei der Läufer auf eine Geschwindigkeit zwischen 45 und 100 U/min, vorzugsweise zwischen 60 und 85 U/min gebracht wird und wenigstens das geläuterte Material am Ausgang des unteren Schlitzes des Raums zwischen dem Ständer und dem Läufer im unteren Teil der Vorrichtung zurückgewonnen wird, wobei das genannte Material mit dem Rest von Schmutzstoffen vermischt sein kann, die von der Oberfläche des zu reinigenden Rohmaterials abgezogen wurden.

14. Verwendung nach einem der Ansprüche 1 bis 12 einer Vorrichtung, die einen Ständer und einen Läufer in Form von Kegeln, wobei die genannten Kegel mit einer gemeinsamen vertikalen Mittelachse zusammengesetzt sind, und ein Mittel umfasst, um den Läufer anzutreiben,
- wobei der genannte Ständer eine Höhe von 950 mm und eine untere Basis von 800 mm hat, wobei die Wand des genannten Ständers aus Stahl von 15 mm Dicke besteht und nicht geradlinig ist und einen unteren Teil hat, der sich auf eine Höhe von 200 mm mit einem Winkel von 20° in Bezug zur Vertikalen erhebt, und einen an den unteren Teil angefügten oberen Teil hat, der sich auf eine Höhe von 750 mm mit einem Winkel von 25° in Bezug zur Vertikalen erhebt, wobei der untere Teil und der obere Teil einen Winkel von 175° zwischen sich bilden,
- wobei der genannte Läufer eine Höhe von 1000 mm und eine untere Basis von 750 mm hat, wobei die Wand des genannten Ständers aus Stahl von 15 mm Dicke besteht, geradlinig ist und einen Winkel von 25° in Bezug zur Vertikalen bildet.
